# EUROPÄISCHE PATENTSCHRIFT

(11) **EP 3 781 938 B1**
(45) Veröffentlichungstag und Bekanntmachung des Hinweises auf die Patenterteilung: **06.08.2025**
(21) Anmeldenummer: 19721547.8
(22) Anmeldetag: 12.04.2019
(51) Int. Cl.: G01N 29/04, G01N 29/11, G01N 29/22, G01N 29/24, G01N 29/265, G01N 29/28

(54) **VORRICHTUNG UND VERFAHREN ZUR BESTIMMUNG DER AUSDEHNUNG VON FEHLSTELLEN MITTELS V-DURCHSCHALLUNG**
DEVICE AND METHOD FOR DETERMINING THE EXPANSION OF IMPERFECTIONS BY MEANS OF V-TRANSMISSION
DISPOSITIF ET PROCÉDÉ DE DÉTERMINATION DE L'EXTENSION D'ENDROITS DÉFECTUEUX PAR SONDAGE ACOUSTIQUE V

(30) Priorität: 20.04.2018 DE 102018109574
(43) Veröffentlichungstag der Anmeldung: 24.02.2021
(73) Patentinhaber: Rosen IP AG, 6370 Stans (CH)
(72) Erfinder: THALE, Werner, 49134 Wallenhorst (DE); ESSELING, Michael, 46354 Südlohn (DE)
(74) Vertreter: Wischmeyer, André
(86) Internationale Anmeldenummer: PCT/EP2019/059543
(87) Internationale Veröffentlichungsnummer: WO 2019/201804

(56) Entgegenhaltungen:
- DE-A1- 10 202 432
- DE-A1- 102012 110 917
- JP-A- S6 073 453
- US-A- 2 799 157
- US-A- 2 893 239
- US-A- 5 201 225
- US-A1- 2008 148 856
- JENNIFER E MICHAELS ET AL: "An Ultrasonic Angle Beam Method for in situ Sizing of Fastener Hole Cracks", JOURNAL OF NONDESTRUCTIVE EVALUATION, KLUWER ACADEMIC PUBLISHERS-PLENUM PUBLISHERS, NE, vol. 25, no. 1, 16 May 2006 (2006-05-16), pages 2 - 15, XP019401060, ISSN: 1573-4862, DOI: 10.1007/S10921-006-0002-9

## Beschreibung

Die Erfindung betrifft ein Verfahren zur Bestimmung der Ausdehnung von Fehlstellen, insbesondere von Risstiefen, in einem Prüfkörper, vorzugsweise einer Wandung einer Pipeline. Bei dem Verfahren werden von mindestens einem Sendewandler Schallwellen im Ultraschallbereich angeregt, die sich in Form eines Schallbündels ausbreiten, wobei die akustische Achse des Schallbündels vorzugsweise einen Winkel mit der Normalen einer dem Sendewandler zugewandten Oberfläche einschließt. Die Schallwellen koppeln schräg in den Prüfkörper ein und werden an einer vorzugsweise äußeren Grenzfläche des Prüfkörpers insbesondere V-förmig reflektiert. Die Grenzfläche kann hierbei die äußere Oberfläche des Prüfkörpers bilden. Bei aus mehreren Schichten aus insbesondere unterschiedlichen Materialien aufgebauten Prüfkörpern kann die entsprechende Grenzfläche jedoch auch innerhalb des Prüfkörpers angeordnet sein. Dies ist beispielsweise bei einer Rohrleitung mit einem metallischen Kern, der von einem Betonmantel umhüllt wird, der Fall. Die an der Grenzfläche des Prüfkörpers reflektierten Schallwellen werden von mindestens einem von dem Sendewandler beabstandeten Empfangswandler aufgenommen. Aus einer Verringerung der Amplitude der vom Empfangswandler aufgenommenen Schallwellen wird mittels einer Auswerteeinheit eine Ausdehnung einer innerhalb eines Schallwegs angeordneten Fehlstelle bestimmt. Die Auswerteeinheit kann in Teilen in einer nachbeschriebenen Vorrichtung in Form üblicher für die Auswertung von Ultraschallwandlern verwendeter elektrischer und/oder elektronischer Mittel vorhanden sein, diese Mittel können auch zumindest in Teilen von der Vorrichtung entfernt vorhanden sein.

Weiterhin umfasst die Erfindung eine Anordnung zur Durchführung des erfindungsgemäßen Verfahrens, umfassend eine Vorrichtung zur Detektion von auf Fehlstellen in einem Prüfkörper basierenden Signalen und eine Auswerteeinheit zur Auswertung der von der Vorrichtung aufgenommenen auf Fehlstellen in einen Prüfkörper basierenden Signalen nach dem erfindungsgemäßen Verfahren.

Ein derartiges Verfahren ist als V- bzw. W-Durchschallung aus der zerstörungsfreien Materialprüfung mittels Ultraschalltechnologie bekannt und wird beispielsweise zum Prüfen von Schweißnähten eingesetzt. Hierbei werden Sendewandler und Empfangswandler in Form von Prüfköpfen verwendet, die unmittelbar auf den Prüfkörper aufgesetzt werden.

US 2008/0148856 A1 offenbart eine Messvorrichtung mit zwei Ultraschallwandlern zur Untersuchung einer hohlen Struktur sowie ein Verfahren zur Bestimmung von Fehlstellen, bei dem ein Ultraschallwandler eine Schallwelle aussendet und das System einen schadhaften Bereich feststellt, wenn der andere Ultraschallwandler die Welle nicht oder nur mit reduzierter Amplitude empfängt. Weiterhin ist die Verwendung eines flüssigen oder gelförmigen Kopplungsmediums gezeigt, um die Ultraschallwellen effektiver in die und aus der zu untersuchenden Struktur zu koppeln.

US 2,893,239 offenbart eine Messvorrichtung mit drei in einem Flüssigkeitstank angeordneten Ultraschallwandlern zum Auffinden von Defekten in metallischen Objekten, insbesondere Schienen. Die von den Ultraschallwandlern empfangenen Signale werden auf einer Kathodenstrahlröhre dargestellt, wobei ein Bediener der Darstellung den Defekttyp sowie die ungefähre Ausrichtung und Lage eines Defekts entnehmen kann.

US 5,201,225 zeigt eine Vorrichtung und ein Verfahren zur Bestimmung der Dicke beschichteter Platten mit einer "dual type" Ultraschallsonde, die einen Ultraschallsender sowie einen Ultraschallempfänger aufweist. Die Dicke einer beschichteten Platte wird hierbei aufgrund von Laufzeiten bzw. Laufzeitunterschieden von Ultraschallsignalen ermittelt.

DE 10 2012 110 917 A1 zeigt eine Ultra-Schallprüfeinrichtung zur zerstörungsfreien Prüfung eines Werkstücks mit einer Innenbohrung. Die Einrichtung weist zumindest einen Prüfkopf auf, in dem zumindest ein Ultraschallwandler angeordnet ist. Informationen zu einem konkreten Messverfahren sind nicht offenbart.

DE 102 02 432 A1 zeigt ein Verfahren und eine Vorrichtung zum Untersuchen von Rohrleitungen mittels Ultraschall. Die Vorrichtung weist aus einer Mehrzahl von aneinandergereihten Sensorelementen aufgebaute Messsensoren auf. Die Auswertung der von den Messsensoren aufgenommenen Signalen basiert auf deren Laufzeiten bzw. Laufzeitdifferenzen.

US 2,799,157 offenbart einen Vorrichtung mit einem Sendewandler und einen Empfangswandler, die entlang der Oberfläche eines Testkörpers bewegt werden kann. Die Auswertung bzw. die Bestimmung von etwaigen Defekten im Testkörper erfolgt anhand der Intensität der vom Empfangswandlers aufgenommenen Signale.

JP 60 073 4560 offenbart ein Verfahren zum Bestimmen von Defekten mittels Ultraschall. Ein Sendewandler sendet Ultraschallwellen aus, die von einem Empfangswandler aufgenommen werden. Ein sich aus den gemessenen Werte ergebendes Muster wird mit zuvor bestimmten Mustern verglichen, um einen etwaig vorhandenen Defekt sowie ggf. den Defekttyp zu bestimmen.

Die Veröffentlichung An Ultrasonic Angle Beam Method for in situ Sizing of Fastener Hole Cracks von J. E. Michaels, T. E. Michaels und Bao Mi offenbart ein Verfahren zur Bestimmung von Ermüdungsrissen um Befestigungslöcher in Strukturkomponenten aus Aluminium. Durch einen Sendewandler werden Ultraschallwellen auf das Befestigungsloch gesendet und die Reduktion der Energie des an einem Empfangswandler detektierten Signals wird bestimmt. Die Messungen werden jeweils unter Last und in einem lastfreien Zustand durchgeführt. Aus dem Verhältnis der Energien der am Empfangswandler detektierten Signale kann die Fläche eines Defekts bestimmt werden.

Aufgabe der Erfindung ist es, ein Verfahren bereitzustellen, dass zuverlässig die Bestimmung von Risstiefen etwaiger Risse in einem Prüfkörper über einen größeren Bereich von Risstiefen ermöglicht.

Bei dem Verfahren gemäß Anspruch 1 werden die Sendewandler und die Empfangswandler mit einem zumindest im Wesentlichen konstanten Abstand zum Prüfkörper an diesem vorbeigeführt. Die Schallwellen koppeln mit einer Vorlaufstrecke über ein flüssiges Medium, ein Koppelmedium, in den Prüfkörper ein. Dadurch, dass Sendewandler und Empfangswandler vom Prüfkörper beabstandet angeordnet sind, können sie berührungslos an dem Prüfkörper entlang geführt werden. Eine Prüfung des Prüfkörpers kann dabei erfolgen, während die Bewegung von Sendewandler und Empfangswandler am Prüfkörper vorbei erfolgt. Das Verfahren kann durch die berührungsfreie Ausführungsform auch bei Prüfkörpern mit sehr großer Ausdehnung, wie beispielsweise Wandungen einer Pipeline, mit hoher Zuverlässigkeit durchgeführt werden. Der Empfangswandler bzw. der Sendewandler sind mechanischen Belastungen und dem damit einhergehenden Verschleiß nicht bzw. nur in stark vermindertem Maß ausgesetzt. Damit kann das Verfahren für lange Zeiträume bzw. große Prüfkörper ohne oder nur mit geringen Unterbrechungen für Wartungen und Reparaturen durchgeführt werden.

Erfindungsgemäß nimmt ein weiterer Empfangswandler die an einer Fehlstelle reflektierten Schallwellen auf. Dieser Empfangswandler ist hierbei vorzugsweise benachbart zum Sendewandler angeordnet. Der weitere Empfangswandler nimmt die von der Fehlstellen zurückgeworfenen Teile der Schallwelle auf. Auch aus diesem Echo kann auf eine Risstiefe geschlossen werden. Während das von dem Empfangswandler aufgenommene Signal aus einer V-förmigen Durchschallung des Prüfkörpers besonders gut geeignet ist, Risstiefen ab ca. 3 mm Tiefe, vorzugsweise bis 10 mm Tiefe, zu erkennen, ist die Auswertung des Echos, das mittels des weiteren Empfangswandlers aufgenommen wird, besonders gut geeignet, Risstiefen bis ca. 4 mm Tiefe aufzunehmen. Durch eine Kombination beider Methoden und eine gemeinsame Auswertung in der Auswerteeinheit können somit Risstiefen von Fehlstellen über einen im Vergleich zum Stand der Technik sehr großen Tiefenbereich bestimmt werden.

Die Abnahme der Empfindlichkeit des Verfahrens der V-Durchschallung bei kleinen Risstiefen rührt daher, dass es bei kleinen Risstiefen kaum zu einer Abschwächung der Amplitude der vom Empfangswandler empfangenen Schallwellen durch einen Riss kommt. Das Signal ist somit gesättigt. Eine geringe Änderung der Risstiefe bewirkt nur eine marginale Änderung im Signal.

Bei der Echo-Methode, basierend auf den von einer Fehlstelle in Richtung des Sendewandlers reflektieren Schallwellen, bewirkt hingegen bei sehr großen Rissen ein Zuwachs der Risstiefe kaum noch einen Zuwachs der Amplitude der reflektieren Schallen, des Echos. Das Echosignal, das vom weiteren Empfangswandler aufgenommen wird, ist bei großen Risstiefen gesättigt, da die Schallwellen bereits nahezu vollständig reflektiert werden.

In Simulationsversuchen hat sich ferner überraschend herausgestellt, dass die Auswertung des Echo-Signals weitere Vorteile bei schräg liegenden Rissen bzw. Nuten bietet. Bei bisherigen Verfahren, bei denen ein Winkelspiegelecho gemessen wird, hängt dessen Amplitude stark von der Neigung der Fehlstelle ab. So kann die Amplitude eines Signals, das von einer senkrecht zur Oberfläche des Prüfobjekts verlaufenden Fehlstelle (Neigungswinkel 0 °) herrührt, um ein Vielfaches größer sein als die Amplitude eines von einer beispielsweise um 10 ° geneigten Fehlstelle herrührenden Signals. Die Amplitude des verfahrensgemäß aufgenommenen Echo-Signals bleibt hingegen bei Neigungswinkeln von bis zu ± 10 ° nahezu unverändert und ermöglicht eine zuverlässige Detektion und Bestimmung auch schräg verlaufender Fehlstellen.

Erfindungsgemäß werden die Risstiefen aus der Differenz der Amplituden, die der Empfangswandler und der weitere Empfangswandler aufnehmen bzw. aufgenommen haben, bestimmt. Durch die Bildung der Differenz der Kennlinien für den Zusammenhang zwischen Risstiefe und Amplitude der jeweils aufgenommenen Schallwellen wird eine relativ gleichmäßig verlaufende gemeinsame Kennlinie erzeugt, über die die Risstiefe aus den entsprechend gemessenen Amplituden bestimmt werden kann.

Die Korrelation zwischen Risstiefe und Amplitude der vom Empfangswandler aufgenommenen Schallwellen bzw. zwischen Risstiefe und Amplitude der vom weiteren Empfangswandler aufgenommenen, an der Fehlstelle reflektierten Schallwellen kann vorzugsweise bei der V-förmigen Durchschallung und/oder bei der Echo-Methode durch Messungen an einem definierten Referenzkörper mit bekannten Fehlstellenausdehnung, insbesondere bekannten Fehlstellentiefen, bestimmt werden.

Weiterhin werden bei einer Auswertung über die Differenz der Amplituden nicht durch Fehlstellen hervorgerufene Änderungen der Amplituden, von denen sowohl der Empfangswandler als auch der weitere Empfangswandler gleichermaßen betroffen sind, aus der Auswertung herausgerechnet. Bei der Verwendung der entsprechenden Methoden zur Inspektion von Wandungen von Pipelines beispielsweise ist vor allem an eine Abschwächung der Amplituden durch Ablagerungen auf der den Wandlern zugewandten Oberfläche des Prüfkörpers zu denken. Durch die Kombination der Signale kann hier eine zuverlässige Risstiefenbestimmung unabhängig von derartigen Ablagerungen erfolgen.

Die Aufgabe wird weiterhin durch eine erfindungsgemäße Anordnung gemäß Anspruch 10 gelöst.

Vorteilhafte Ausgestaltungen der Erfindung sind den auf die unabhängigen Ansprüche rückbezogenen Unteransprüche sowie der nachfolgenden Beschreibung zu entnehmen.

In einer bevorzugten Ausführungsform wird der Sendewandler in Form eines Sende- und Empfangswandlers als weiterer Empfangswandler verwendet. Hierdurch kann das Verfahren mit geringerem materiellen Aufwand durchgeführt werden, da durch die Kombination von Sendewandler und weiterem Empfangswandler eine separater weiterer Empfangswandler entfallen kann.

Besonders vorteilhaft ist die Verwendung eines Sende- und Empfangswandlers in Verbindung mit einer pulsförmigen Anregung von Schallwellen. Der Sendewandler regt hierbei einen kurzen Schallimpuls an. Die Sendephase ist bei geeigneter Dicke des Prüfkörpers beendet, wenn das Echo, also die an einer Fehlstelle in Richtung des Sendewandlers reflektierten Anteile des Schallimpulses, den Wandler erreicht. Der Sendewandler kann somit als weiterer Empfangswandler fungieren, ohne dass es zu einer Überlagerung mit einer Anregung des Sendwandlers kommt.

Der Körper, der als Prüfkörper für das erfindungsgemäße Verfahren dient, weist vorzugsweise parallel zueinander verlaufende, bei Nichtbeachtung etwaiger Fehlstellen oder Schweißnähte plane Oberflächen auf, die im Vergleich zur Ausdehnung des Prüfkörpers einen geringen Abstand zueinander haben. Der Sendewandler sowie der Empfangswandler können als Piezowandler ausgestaltet sein. Hierbei werden die piezoelektrischen Elemente des Wandlers unter Anlegen einer Spannung verformt bzw. generieren eine Spannung, wenn diese verformt werden. Durch das Anregen des piezoelektrischen Elements in einem entsprechenden Sendewandler mit einer ausreichend hohen Frequenz werden von dem Sendewandler Schallwellen in dem den Sendewandler umgebenden Medium angeregt. Der Sendewandler ist über ein flüssiges Medium mit dem Prüfkörper verbunden, so dass die Technik insbesondere in Flüssigkeiten führenden Rohrleitungen während deren Betrieb eingesetzt werden kann. Die in dem Medium angeregten Ultraschallwellen treffen unter einem Winkel zur Normalen der Oberfläche auf die Oberfläche des Prüfkörpers und koppeln derart in den Prüfkörper ein, dass die Schallwellen schräg durch den Prüfkörper verlaufen. Die Schallwellen werden an einer vorzugsweise äußeren Grenzfläche reflektiert. Die Schallwellen durchlaufen wiederum die Dicke des Prüfkörpers und treten an der ersten Grenzfläche beabstandet von der Eintrittsstelle wieder aus. Der Ort des Austritts ist hierbei von dem Winkel, mit dem die Schallwellen in den Prüfkörper einkoppeln sowie von der Dicke des Prüfkörpers abhängig. Die aus dem Prüfkörper austretenden Schallwellen koppeln wiederum in das Medium ein und werden von einem Empfangswandler, der auf zumindest einem Teil der Austrittsstelle ausgerichtet ist, aufgenommen. Hier werden die Schallwellen wieder in ein elektrisches Signal umgewandelt. Der Empfangswandler ist somit für die Aufnahme von Schallwellen über das Koppelmedium mit dem Prüfkörper akustisch gekoppelt. Der Abstand von Sende- und Empfangswandler vom Prüfkörper beträgt vorzugsweise zwischen 0,5 cm und 5 cm.

Während Sendewandler und Empfangswandler mit zueinander konstantem Abstand berührungslos an dem Prüfkörper vorbeigeführt werden, kommt es bei Fehlstellen dazu, dass die vom Empfangswandler aufgenommenen Schallwellen eine verringerte Amplitude aufweisen. Hieraus wird in einer Auswerteinheit die Ausdehnung der Fehlstelle bestimmt.

Hierzu wird davon ausgegangen, dass die Verringerung der Amplitude der vom Empfangswandler aufgenommenen Schallwellen daher rührt, dass zumindest ein Teil der Schallwellen an einer innerhalb des Schallwegs der Schallwellen durch den Prüfkörper von der Eintrittsstelle zur Austrittsstelle angeordneten Fehlstelle in eine andere Richtung als zur ansonsten vorhandenen Austrittsstelle reflektiert wird. Während des Vorbeiführens von Sendewandler und Empfangswandler am Prüfkörper kann eine räumliche Ausdehnung der Fehlstelle entlang der Bewegungsrichtung von Sendewandler und Empfangswandler bestimmt werden.

Besonders bevorzugt wird aus der Verringerung der Amplitude der vom Empfangswandler aufgenommenen Schallwellen die Tiefe der Fehlstelle bestimmt. Neben einer Längsausdehnung von Fehlstellen innerhalb des Prüfkörpers ist insbesondere die Tiefe von Rissen eine wichtige Größe, die mit der zerstörungsfreien Materialprüfung aufgenommen werden soll. Derartige Risse stellen eine Schwächung des Materials des Prüfkörpers dar. Bei sehr tiefen Rissen ist der Prüfkörper lokal stark geschwächt. Bei bestimmungsgemäßen Gebrauch des Prüfkörpers, wenn beispielsweise eine Wandung einer Pipeline für den Transport eines Fluids unter Druck gesetzt wird, droht an den Fehlstellen ein Versagen des Materials. Bei Kenntnis der Risstiefe kann bis zur Reparatur die Belastung des Prüfkörpers, beispielweise durch Absenken des Drucks innerhalb einer Pipeline, entsprechend angepasst werden. Bis die Reparatur erfolgt ist, kann so ein Versagen des Prüfkörpers und mögliche Folgeschäden, beispielsweise das Austreten eines Fluids aus einer Pipeline, vermieden werden.

Die Verringerung der Amplitude der vom Empfangswandler aufgenommenen Schallwellen korreliert hierbei mit der Risstiefe. Ein tieferer Riss führt dazu, dass ein größerer Teil einer Schallwelle an dem Riss reflektiert wird und somit nicht mehr auf dem vorgesehenen Schallweg zum Empfangswandler gelangt. Die Korrelation zwischen Abnahme der Amplitude und Risstiefe wird üblicherweise im Vorfeld anhand eines dem Prüfkörper ähnlichen Referenzkörpers bestimmt, in dem entsprechend definierte Fehlstellen bekannter Ausdehnung, insbesondere bekannter Tiefe, maschinell eingebracht wurden. Diese Korrelation kann in Form einer Kennlinie dargestellt werden.

Es hat sich in überraschender Weise gezeigt, dass insbesondere in Pipelines Risse mit einer Tiefe von bis zu 10 mm sicher detektiert werden können.

Besonders bevorzugt erzeugt der Sendewandler Schallwellen in Form von Schallimpulsen. Hierdurch wird das Verhältnis Signal zu Rauschen verbessert. Die Ausdehnung von Fehlstellen wird mit einem derartigen Verfahren zuverlässiger und genauer bestimmt.

Besonders bevorzugt regt der Sendewandler Schallimpulse in Form eines Rechteckimpulses oder eines Nadelimpulses an, so dass in der Auswertung gut detektierbare Impulse verarbeitet werden können.

Bevorzugt regt der Sendewandler in bestimmten zeitlichen Abständen und/oder an bestimmten räumlichen Positionen, d.h. diskret, Schallwellen an, während Sendewandler und Empfangswandler am Prüfkörper vorbeigeführt werden. Hierdurch wird ein Messgitter über dem Prüfkörper erzeugt, bei dem an bestimmten Punkten des Messgitters Messungen durchgeführt werden. Für die Prüfung einer Wandung einer Pipeline beispielsweise könnten Messungen jeweils im Abstand von je einem Millimeter in Längsrichtung sowie in Umfangsrichtung erfolgen. Das Messgitter kann hierbei je nach geforderter Genauigkeit und vorhandener Verarbeitungskapazität bzw. der geplanten Vorschubgeschwindigkeit angepasst werden. Hierbei kann auch der für die Prüfung des Prüfkörpers eingeplante Zeitraum berücksichtigt werden. So kann beispielsweise auch eine Messung in Vorschubrichtung nur alle 2 oder 3 mm durchgeführt werden.

Vorzugsweise regt der Sendewandler Schallwellen in einem Frequenzbereich zwischen **1 MHz und 10 MHz, besonders bevorzugt mit ca. 4 MHz, d. h. 4 MHz ± 0,2** MHz, an.

**In** einer bevorzugten Ausführungsform bildet die vom Sendewandler angeregte Schallwelle eine parallele Wellenfront aus. Hierdurch wird erreicht, dass der Empfangswandler beim Aufnehmen der an der vorzugsweise äußeren Grenzfläche des Prüfkörpers V-förmig reflektierten Schallwelle ein klares und starkes Signal erzeugt. Besonders bevorzugt werden die an der Grenzfläche reflektierten Schallwellen hierzu von einem Empfangswandler aufgenommen, dessen akustische Achse sich mit der akustischen Achse des Sendewandlers trifft. Die Sendewandler und Empfangswandler sind somit entsprechend der Ausbreitungsrichtung der Schallwellen V-förmig zueinander geneigt. Die akustische Achse vom Sendewandler entspricht der akustischen Achse des abgehenden Schallbündels. Die beim Empfangswandler eingehenden Schallwellen werden entlang dessen akustischer Achse detektiert.

**In** einer alternativen Ausführungsform bildet die vom Sendewandler angeregte Schallwelle eine divergente Wellenfront aus. Die an der vorzugsweise äußeren Grenzfläche V-förmig reflektierte Schallwelle wird hierbei jeweils teilweise von in Richtung der Hauptausbreitungsrichtung der Schallwelle voneinander beabstandet angeordneten Empfangswandlern, die ihrerseits jeweils unterschiedliche Abstände zum Sendewandler aufweisen, aufgenommen. Eine im Schalllaufweg angeordnete Fehlstelle hat hierbei nicht unbedingt eine Abschwächung der Amplitude bei einem Empfangswandler zur Folge, sondern bewirkt, dass an einem Empfangswandler oder einer Gruppe von Empfangswandlern keine entsprechende Amplitude mehr festgestellt werden kann. Anhand der Informationen, welche Empfangswandler einen entsprechenden Abfall der Amplitude bzw. ein entsprechendes Ausbleiben der Amplitude verzeichnen, kann auf die Risstiefe geschlossen werden.

**In** einer bevorzugten Ausführungsform wird die Dicke des Prüfkörpers bestimmt. Die Dickenbestimmung kann über die Auswertung der Time-Of-Flight-Informationen bezüglich der den Prüfkörper V-förmig durchschallenden Schallwellen erfolgen. Alternativ kann die Dicke des Prüfkörpers über einen dezidierten Ultraschalltiefensensor bestimmt werden. Zur Auswertung der aufgenommenen Signale können für unterschiedliche Dicken des Prüfkörpers unterschiedliche Kennlinien, die mit Referenzkörpern unterschiedlicher Dicke erstellt werden, herangezogen werden. Hierdurch kann auch bei lokalen Abweichungen der Dicke des Prüfkörpers von der angenommen Dicke, auf die eine Vorrichtung zur Durchführung von Messungen ausgelegt wird, eine zuverlässige Bestimmung der Ausdehnung von Fehlstellen, insbesondere von Risstiefen, erfolgen.

Ebenfalls Gegenstand der Erfindung ist eine Anordnung zur Durchführung des erfindungsgemäßen Verfahrens, umfassend eine Vorrichtung zur Detektion von auf Fehlstellen basierenden Signalen in einem Prüfkörper, insbesondere ein Inspektionsmolch zur Prüfung einer Rohrleitung und eine Auswerteeinheit zur Auswertung der von der Vorrichtung aufgenommenen auf Fehlstellen in einen Prüfkörper basierenden Signalen nach dem erfindungsgemäßen Verfahren.. Die Vorrichtung weist zumindest einen Sendewandler und zumindest einen Empfangswandler auf, wobei der Sendewandler und der Empfangswandler voneinander beabstandet und mit ihren akustischen Achsen so aufeinander zugeneigt angeordnet sind, dass Signale einer V-förmigen Durchschallung aufgenommen werden können.

Eine derartige Vorrichtung zur Detektion von auf Fehlstellen basierenden Signalen in einem Prüfkörper ist aus dem Stand der Technik bekannt. Hierbei werden Prüfköpfe mit einem Sendewandler bzw. einem Empfangswandler verwendet, die unmittelbar am Prüfkörper oder an einem mit dem Prüfkörper unmittelbar in Kontakt stehenden prismatischen Element in Kontakt stehen. Nachteilig ist hier wiederum möglicher Verschleiß an Sendewandler und Empfangswandler, bzw. an den prismatischen Elementen, wenn diese am Prüfkörper vorbeigeführt werden.

Die oben genannten Nachteile werden bei einer Vorrichtung einer erfindungsgemäßen Anordnung nach Anspruch 10 dadurch vermieden, dass der Sendewandler und Empfangswandler in einer Aufnahme angeordnet sind, wobei die Aufnahme in Richtung des Prüfkörpers bewegbar ist und die Aufnahme ein Führungselement aufweist, das in Kontakt mit dem Prüfkörper bringbar ist, dergestalt, dass in einer Betriebsposition der Sendewandler und der Empfangswandler bei Kontakt des Führungselementes mit dem Prüfkörper vom Prüfkörper beabstandet in der Aufnahme angeordnet sind. Hierdurch wird zum einem vermieden, dass Sendewandler und/oder Empfangswandler in Kontakt mit dem Prüfkörper gelangen, und dabei möglicherweise beschädigt werden. Zum anderen wird dadurch, dass die Aufnahme in Richtung des Prüfkörpers in eine Betriebsstellung verbringbar ist, in der das Führungselement Kontakt mit dem Prüfkörper hat, sichergestellt, dass Sendewandler und/oder Empfangswandler in einem definierten Abstand vom Prüfkörper an diesem vorbeigeführt werden.

Erfindungsgemäß weist die Vorrichtung der Anordnung mehrere Paarungen von Sendewandlern und Empfangswandlern auf, die quer zur Vorschubrichtung zueinander versetzt und in Vorschubrichtung hintereinander versetzt in einer gemeinsamen Aufnahme angeordnet sind. Durch die quer zur Vorschubrichtung zueinander versetzte Anordnung der Paarungen von Sendewandler und Empfangswandler kann die Vorrichtung einen breiteren Bereich des Prüfkörpers bei einem Durchgang abtasten. Hierdurch kann die Anzahl an Durchgängen, mit denen der Prüfkörper vermessen wird, reduziert werden. Durch die hintereinander versetzte Anordnung ist es möglich, auch geringere Versetzungen der Paarungen von Sendewandler und Empfangswandler zu realisieren, bei denen sich anderenfalls zwei Sendewandler bzw. zwei Empfangswandler aufgrund ihres Bauraumes gegenseitig behindern würden.

Besonders bevorzugt ist das Führungselement in Vorschubrichtung der Vorrichtung während eines Prüfdurchgangs vor dem Sendewandler bzw. dem Empfangswandler angeordnet. Hierdurch kann eine Beschädigung des Sendewandlers bzw. des Empfangswandlers vermieden werden, wenn der Prüfkörper eine unregelmäßige Oberfläche aufweist, oder sich Ablagerungen auf der dem Sendewandler bzw. Empfangswandler zugewandten Oberfläche des Prüfkörpers abgelagert haben. Das in Vorschubrichtung vor den Wandlern angeordnete Führungselement wird bei Kontakt mit einer aus der Oberfläche des Prüfkörpers in Richtung des Sendewandlers bzw. Empfangswandlers vorspringenden Unregelmäßigkeit ein Abheben der bewegbaren Aufnahme von der Oberfläche des Prüfkörpers bewirken. Hierbei werden mit der Aufnahme auch der Sendewandler bzw. der Empfangswandler von der Oberfläche abgehoben und somit vor Beschädigungen geschützt. Somit wird ein sicherer Betrieb der Vorrichtung ermöglicht. Dies ist besonders vorteilhaft beim Einsatz in Form eines Inspektionsmolches, der über längere Strecken innerhalb einer von außen nicht bzw. nur schwer zugänglichen Pipeline Verwendung findet.

In einer bevorzugten Ausführungsform ist das Führungselement hierbei als Kufe ausgestaltet. Eine derartige Kufe ermöglicht ein Entlanggleiten an der Oberfläche des Prüfkörpers und ein Abheben der Aufnahme, wenn die Kufe auf ein Hindernis trifft. Die kufenförmige Ausgestaltung vermeidet hierbei weitgehend Probleme eines Verkantens an einem plötzlich auftretenden Hindernis auf der Oberfläche des Prüfkörpers.

Vorzugsweise ist das Führungselement durch eine in Richtung des Prüfkörpers vorspringende Ausstülpung der Aufnahme ausgebildet. Das Führungselement ist somit integral mit der Aufnahme ausgebildet und bewirkt zuverlässig ein Abheben der Aufnahme vom Prüfkörper, wenn die Oberfläche des Prüfkörpers eine vorspringende Unregelmäßigkeit aufweisen sollte. Besonders bevorzugt weist die Aufnahme ein vor sowie ein hinter dem Sendewandler bzw. Empfangswandler angeordnetes Führungselement auf. Besonders bevorzugt weist die Aufnahme ein umlaufendes Führungselement auf, das die in der Aufnahme angeordneten Sendewandler bzw. Empfangswandler umschließt. Durch ein umlaufendes Führungselement kann sichergestellt werden, dass ein kurzer Vorsprung nicht ein momentanes Abheben der Aufnahme von der Oberfläche des Prüfkörpers bewirkt, wobei nach der Passage des Führungselementes eine Bewegung der Aufnahme in Richtung des Prüfkörpers erfolgt und Sendewandler und/oder Empfangswandler durch den Vorsprung beschädigt wird, wenn er sich hinter dem Führungselement bzw. zwischen zwei Führungselementen befindet.

Vorzugsweise weist das Führungselement eine insbesondere keramische Verschleißauflage auf. Da das Führungselement in Kontakt mit der Oberfläche des Prüfkörpers steht, kann durch eine Verschleißauflage eine Beschädigung der Oberfläche des Prüfkörpers vermieden bzw. die Verschleißfestigkeit des Führungselementes verbessert werden. Hierdurch kann die Lebensdauer und somit die Betriebssicherheit der Vorrichtung verbessert werden. Weiterhin kann durch geeignete Materialwahl der Verschleißauflage die Reibung zwischen Prüfkörper und Führungselement minimiert werden.

**In** einer alternativen, bevorzugten Ausführungsform ist das Führungselement als rotierbarer zylindrischer Körper radförmig ausgebildet. Durch die Verwendung eines radförmigen Führungselements kann der Verschleiß an der Oberfläche des Prüfkörpers bzw. des Führungselementes minimiert werden. Das Führungselement gleitet dabei nicht an der Oberfläche des Prüfkörpers entlang, sondern rollt auf dieser ab. Reibung und der damit einhergehende Verschleiß wird weitgehend minimiert. Die Zuverlässigkeit und Betriebssicherheit der Vorrichtung wird hierdurch erhöht.

Vorzugsweise weist die Vorrichtung ein die Aufnahme mit einer diese in Richtung des Prüfkörpers bewegenden Kraft beaufschlagendes Rückstellelement auf. Durch ein derartiges Rückstellelement wird sichergestellt, dass die Aufnahme bzw. das Führungselement in Kontakt mit der Oberfläche des Prüfkörpers gebracht wird. Das Rückstellelement ist dabei so ausgebildet, dass ein Ausweichen gegenüber möglicherweise hervorspringenden Unregelmäßigkeiten der Oberfläche des Prüfkörpers möglich ist. Besonders bevorzugt ist das Rückstellelement hierbei als Feder ausgebildet. Alternativ sind jedoch auch Rückstellelemente beispielsweise als Hydraulikelement oder als Elektromotor denkbar.

In einer bevorzugten Ausführungsform sind einem Sendewandler in unterschiedlichem Abstand zum Sendewandler angeordnete Empfangswandler zugeordnet. Diese Empfangswandler sind zur Aufnahme von von dem Empfangswandler ausgehenden Schallwellen an unterschiedlichen Stellen des Prüfkörpers angeordnet. Hierdurch kann beispielsweise die örtliche Auflösung der auf Fehlstellen zurückgehenden Signale erhöht und die nachfolgende Analyse der Daten verbessert werden. Zusätzlich oder alternativ kann durch die Zuordnung von mehreren Empfangswandlern zu einem Sendewandler auf unterschiedliche Schallwege eines Signals im Prüfkörper, die beispielsweise auf unterschiedliche Dicken des Prüfkörpers an unterschiedlichen zu prüfenden Stellen zurückgehen kann, geschlossen werden.

Besonders bevorzugt sind die akustischen Achsen von Sendewandler und Empfangswandler in einer gemeinsamen Ebene angeordnet. Hierdurch wird insbesondere die Verwendung einer divergenten Schallwelle, die von dem Sendewandler ausgesandt wird, ermöglicht. Hierbei wird das Signal der divergenten Schallwelle an unterschiedlichen Austrittspunkten von unterschiedlichen Empfangswandlern aufgenommen. Hierdurch werden Daten mit einer verbesserten räumlichen Information aufgenommen.

In einer bevorzugten Ausführungsform ist die Vorrichtung als Inspektionsmolch ausgebildet, wobei der Inspektionsmolch eine Mittellängsachse aufweist und in Umfangsrichtung um die Mittellängsachse verteilt eine Mehrzahl von Aufnahmen mit entsprechenden Sendewandlern und Empfangswandlern angeordnet sind. Hierdurch ist es möglich, mit einem Durchgang eines derartigen Inspektionsmolches durch einen Prüfkörper in Form einer Pipeline auf Fehlstellen basierende Signale über mehrere am Umfang des Prüfkörpers bzw. der Pipeline verteilte Stellen aufzunehmen. Im Idealfall sind an einem derartigen Inspektionsmolche so viele Aufnahmen bzw. Sende- und Empfangswandler angeordnet, dass mit einem Durchlauf eine Prüfung der Pipeline im gesamten Umfang mit ausreichender örtlicher Auflösung durchgeführt werden kann. Hierdurch kann die Anzahl von notwendigen Prüfdurchgängen auf vorzugsweise einen Durchgang reduziert werden.

Weitere vorteilhafte Ausgestaltungen können der nachfolgenden Figurenbeschreibung entnommen werden. Es zeigen:
- Fig. 1: eine schematisch Darstellung einer erfindungsgemäßen Anordnung,
- Fig. 2: eine Kennlinie zur Korrelation von gemessener Amplitude und Nuttiefe einer Nut in einem Referenzkörper für das Signal einer V-Durchschallung und für ein Impuls-Echo-Signal,
- Fig. 3: Kennlinie der Differenz der in Fig. 2 dargestellten Signale über die Nuttiefe einer Nut in einem Referenzkörper,
- Fig. 4: eine schematische Darstellung einer alternativen erfindungsgemäßen Anordnung zur Verwendung mit divergenten Schallwellen,
- Fig. 5: Kennlinie zur Korrelation von Nuttiefe in einem Referenzkörper und Position eines Empfangswandlers, an dem die gemessene Amplitude einen vorgebaren Schwellenwert überschreitet, relativ zum Sendewandler,
- Fig. 6: Differenzen von Amplituden nach Fig. 2 und Fig. 3 mit und ohne Ablagerung auf dem Prüfkörper,
- Fig. 7: Simulationsergebnisse der Amplituden eines Winkelspiegelechos und eines Impuls-Echo-Signals bei Variation der Schräglage einer Nut,
- Fig. 8: Vorrichtung zur Detektion von auf Fehlstellen in einen Prüfkörper basierenden Signalen in Form eines Inspektionsmolches zur Durchführung des erfindungsgemäßen Verfahrens,
- Fig. 9: Anordnung von Sendewandler und Empfangswandler in einer Aufnahme eines Inspektionsmolches nach Fig. 8,
- Fig. 10: Anordnung von Sendewandler und Empfangswandler mit Ultraschalltiefensensor nach einer weiteren erfindungsgemäßen Ausbildung.

Nachfolgend werden gleichwirkende Elemente der Erfindung mit einer einheitlichen Bezugsziffer versehen, soweit dies sinnvoll ist. Die nachfolgend beschriebenen Merkmale der Ausführungsbeispiele können auch in anderen Merkmalskombinationen als dargestellt, jedoch zumindest in Kombination mit den Merkmalen eines unabhängigen Hauptanspruchs, Gegenstand der Erfindung sein.

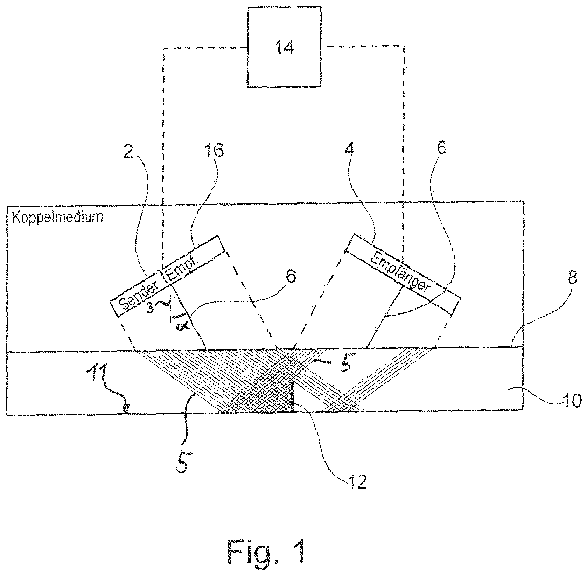

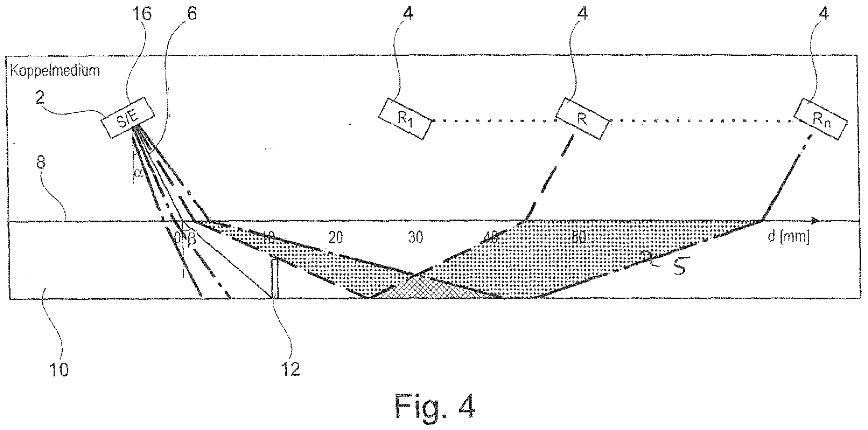

Fig. 1 zeigt schematisch eine erfindungsgemäße Anordnung zur Durchführung des erfindungsgemäßen Verfahrens mit einem Sendewandler 2 und einem Empfangswandler 4. Sendewandler 2 und Empfangswandler 4 sind vom Prüfkörper 10 beabstandet angeordnet. Vom Sendewandler 2 angeregte Schallwellen 5 breiten sich in einem Koppelmedium aus, bis sie in den Prüfkörper 10 einkoppeln. Der Sendewandler 2 schließt mit seiner akustischen Achse 6 einen Winkel α mit einer Normalen 3 auf die Oberfläche 8 eines Prüfkörpers 10, vorzugsweise einer Wand bzw. Wandung einer Pipeline, ein. Die vom Sendewandler 2 angeregten Schallwellen 5 koppeln beim Eintreffen auf den Prüfkörper 10 maßgeblich mit einem Winkel β in den Prüfkörper 10 ein (vergl. Fig. 4) und durchlaufen diesen V-förmig. Hierbei werden die Schallwellen 5 an einer äußeren Grenzfläche 11 des Prüfkörpers 10 reflektiert. Der Empfangswandler 4 ist mit seiner akustischen Achse 6 auf die Austrittsstelle dieser V-förmig den Prüfkörper 10 durchlaufenden Schallwellen ausgerichtet. Auch die akustische Achse 6 des Empfangswandlers 4 schließt mit einer Normalen 3 der Oberfläche 8 des Prüfkörpers 10 einen Winkel α ein. Wie in Fig. 1 erkennbar, kommt es bei Existenz einer Fehlstelle 12 innerhalb des Prüfkörpers 10 dazu, dass die den Prüfkörper 10 durchlaufenden Schallwellen 5 den Empfangswandler 4 nicht vollständig erreichen. Die auf die Fehlstelle 12 auftretenden Schallwellen 5 werden an dieser zumindest teilweise reflektiert. **In** der Folge ist die Amplitude, die der Empfangswandler 4 aufzeichnet, geringer. Hieraus wird in einer Auswerteeinheit 14 auf die Ausdehnung der Fehlstelle 12, und dabei insbesondere auf die Tiefe zurückgerechnet. **In** Fig. 1 ist der Sendewandler 2 in Form eines Sende- und Empfangswandlers dargestellt. Der Sende- und Empfangswandler kombiniert dabei den Sendewandler 2 mit einem weiteren Empfangswandler 16. Die Funktion des weiteren Empfangswandlers 16 kann dabei allein durch eine elektronische Umschaltung des Sendewandlers 2 erreicht werden, so dass dieselbe Hardware abwechselnd als Sende- und als Empfangswandler arbeitet. Dieser nimmt einen Teil der an der Fehlstelle 12 reflektierten Schallwellen 5 als ein Echosignal auf. Hierzu regt der Sendewandler 2 Schallwellen 5 in Form eines Schallimpulses an. Vorzugsweise ist dieser Schallimpuls so kurz, dass der Sendewandler 2 das Anregen der Schallwellen 5 beendet hat, wenn das an einer Fehlstelle 12 reflektierte Echo der Schallwellen 5 den Sendewandler 2 bzw. den weiteren Empfangswandler 16, die vorliegend als ein Bauteil ausgestaltet sind, erreicht.

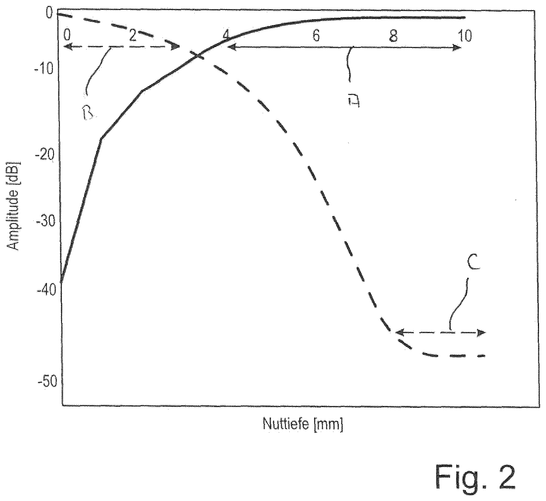

Fig. 2 zeigt den Verlauf der Amplitude, die der Empfangswandler 4 (gestrichelte Linie, V-Durchschallung), bzw. der weitere Empfangswandler 16 aufnimmt (durchgezogene Linie, Impulsechobetrieb) in Abhängigkeit von der Tiefe einer im Schallweg angeordneten Fehlstelle 12. In Fig. 2 sind die Kennlinien für ideale Fehlstellen in Form von maschinell in einen Referenzkörper eingebrachten Nuten jeweils bekannter Tiefe dargestellt. Es ist zu erkennen, dass die Amplitude, die der weitere Empfangswandler 16 aufnimmt, bei Nuttiefen größer als 4 mm mit steigender Nuttiefe kaum ansteigt. Hier kommt es zu einer Sättigung des Signals. Der Bereich von Nuttiefen größer als 4 mm ist als Bereich A gekennzeichnet. Ebenso zeigt die Amplitude des vom Empfangswandler 4 aufgenommenen Signals der V-Durchschallung in einem Bereich von Nuttiefen bis 3 mm eine nur geringe Abnahme der Amplitude. Auch hier ist ein Sättigungsbereich zu erkennen (Bereich B). Ein weiterer Sättigungsbereich ist bei Nuttiefen über 8 mm zu sehen (Bereich C). Der Referenzkörper, der der Darstellung in Fig. 2 zugrunde liegt, hat eine Dicke von 10 mm. Aus Fig. 2 kann entnommen werden, dass Nuttiefen bis 4 mm gut mit dem über den weiteren Empfangswandler 16 aufgenommenen Impuls-Echo-Signal bestimmt werden können. Nuttiefen zwischen 3 mm und 8 mm können demgegenüber sehr gut mit dem vom Empfangswandler 4 aufgenommenen Signal der V-Durchschallung bestimmt werden. Eine Kombination der beiden Betriebsmodi bzw. von Sendewandler 2, Empfangswandler 4 und weiterem Empfangswandler 16 ermöglicht somit eine Bestimmung der Risstiefe in einem Bereich von 0 mm bis 8 mm.

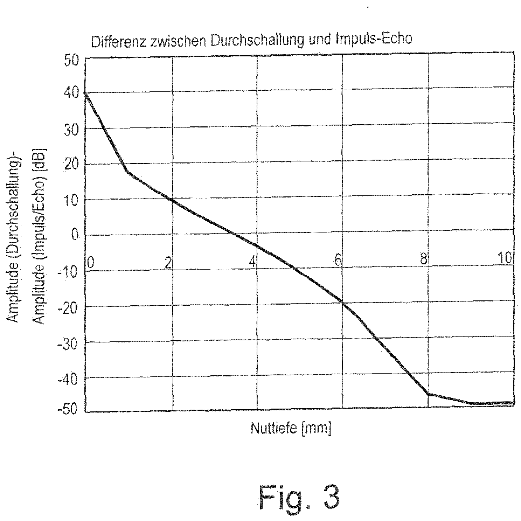

Fig. 3 zeigt eine aus den in Fig. 2 dargestellten Korrelationen erzeugte Differenz der Amplituden. Hierbei ist ein angenähert linearer Zusammenhang zwischen Nuttiefe und Abschwächung der Amplitude auf logarithmischer Skala bis zu einer Nuttiefe von 8 mm zu erkennen. Aus der Verwendung von Empfangswandler 4 und weiterem Empfangswandler 16 kann aus der Differenz der jeweils aufgenommenen Amplituden ein Punkt dieser Kennlinie bestimmt und hierauf auf die Tiefe einer Fehlstelle 12 zurückgeschlossen werden. Dies geschieht in der Auswerteeinheit 14.

Während Fig. 1 einen Sendewandler 2 darstellt, der eine Schallwelle 5 mit weitgehend paralleler Wellenfront aussendet, zeigt Fig. 4 einen Sendewandler 2, der eine Schallwelle 5 mit einer divergierenden Wellenfront aussendet. Die gestrichelten Linien zeigen die Grenzen des ergebenden Schallkegels an, an dem eine -6 dB Dämpfung im Vergleich zur entsprechenden Position im Zentralstrahl auftritt, während die strichpunktierte Linie die Grenzen einer -12 dB Dämpfung zeigen. Wiederum ist der Sendewandler 2 als kombinierter Sende- und Empfangswandler ausgestaltet, der den weiteren Empfangswandler 16 integriert. Ebenfalls ist der Sendewandler 2 wiederum derart ausgerichtet, dass er mit seiner akustischen Achse 6 einen Winkel α mit der Normalen 3 der Oberfläche 8 des Prüfkörpers 10 einschließt. In der Fig. 4 sind mehrere Empfangswandler 4 angeordnet, die in Ausbreitungsrichtung der Schallwellen 5 im Prüfkörper 10 beabstandet vom Sendewandler 2 angeordnet sind und jeweils einen unterschiedlichen Abstand zum Sendewandler 2 aufweisen. Eine Fehlstelle 12 bewirkt wiederum eine Abschattung der Schallwellen 5, die diesmal zur Folge hat, dass nur noch bestimmte Empfangswandler 4 vom Sendewandler 2 angeregte Schallwellen aufnehmen. Sendewandler 2 und Empfangswandler 4 sind vom Prüfkörper 10 beabstandet angeordnet. Vom Sendewandler 2 angeregte Schallwellen 5 pflanzen sich ein einem zwischen Sendewandler 2 und Prüfkörper 10 angeordnetem Koppelmedium fort, bis sie in den Prüfkörper 10 einkoppeln. Ebenso pflanzen sich aus dem Prüfkörper 10 auskoppelnde Schallwellen 5 über das Koppelmedium fort, bis sie von einem Empfangswandler 4 oder dem weiteren Empfangswandler 16 aufgenommen werden.

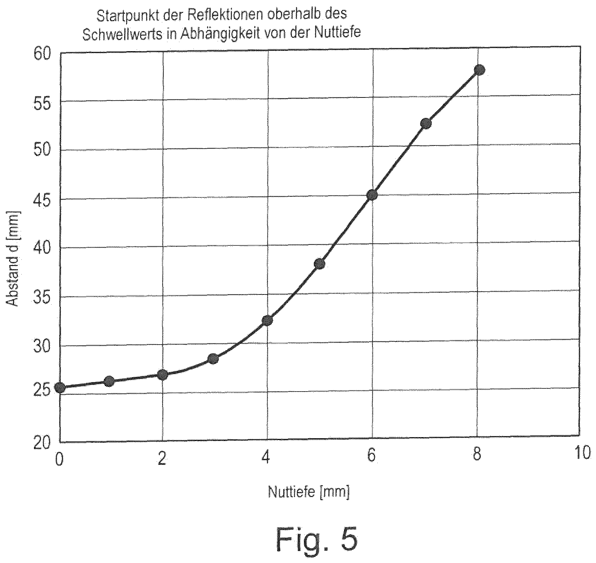

Fig. 5 zeigt eine Darstellung, bei der die Nuttiefe in Korrelation zum Abstand der Empfangswandler 4, an denen eine einen bestimmten Schwellenwert überschreitende Amplitude der Schallwellen 5 festgestellt werden kann, vom Sendewandler 2 dargestellt ist. Je tiefer die Fehlstelle 12 ist, desto weiter ist der erste Empfangswandler 4, an dem der vorgegebene Schwellenwert des Signals überschritten wird, vom Sendewandler 2 entfernt. Somit kann anhand des Abstandes des ersten Empfangswandlers 4, an dem ein Überschreiten des Schwellenwertes festgestellt wird, zum Sendewandler 2 die Fehlstellentiefe bestimmt werden.

Auch hier zeigt sich wieder ein Sättigungsbereich bis Nuttiefen von etwa 3 mm, in der eine Bestimmung der Nuttiefe nur mit diesem Signal kaum möglich ist. Daher verwendet das System nach Fig. 4 ebenfalls ergänzend die Informationen eines Impuls-Echo-Signals, das von dem weiteren Empfangswandler 16 aufgenommen wird, um die Tiefe von weniger tiefen Fehlstellen 12 bestimmen zu können.

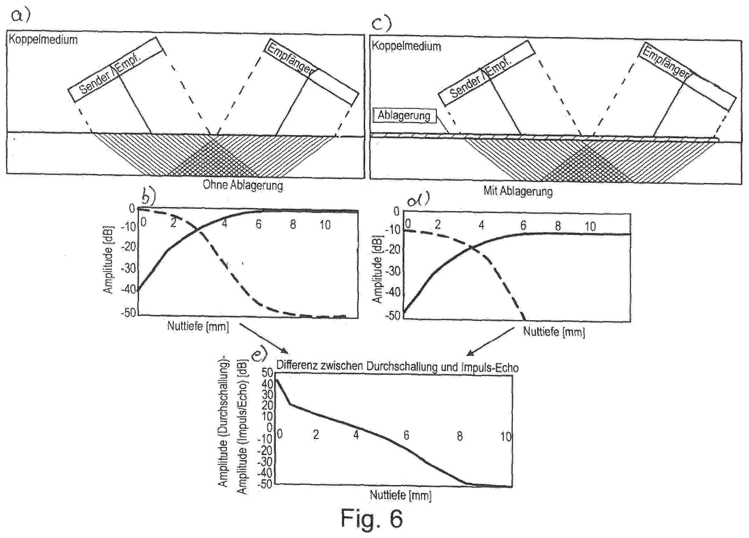

Fig. 6 zeigt, wie die Verwendung der Differenz der Amplituden, die von dem weiteren Empfangswandler 16 (durchgezogene Linie, Impulsechobetrieb) und dem oder den Empfangswandlern 4 (gestrichelte Linie, V-Durchschallung) aufgenommen wird, dazu verwendet werden kann, um die Tiefe von Fehlstellen 12 unabhängig von möglicherweise vorhandenen Ablagerungen auf der Oberfläche 8 des Prüfkörpers 10 zu bestimmen. Fig. 6a zeigt eine V-Durchschallung eines Prüfkörpers 10 ohne Ablagerungen. Fig. 6b zeigt die von dem weiteren Empfangswandler 16 und dem Empfangswandler 4 aufgenommenen Amplituden an einem Referenzkörper mit Nuten unterschiedlicher Tiefe. Die Nuten sind hierbei maschinell eingebracht und die Nuttiefen jeweils bekannt. Fig. 6c zeigt eine V-Durchschallung eines 10 Prüfkörpers 10 mit auf der Oberfläche des Prüfkörpers 10 angeordneten Ablagerungen. Die von dem weiteren Empfangswandler 16 und dem Empfangswandler 4 aufgenommenen Amplituden sind in Fig. 6d dargestellt. Durch die Ablagerungen sind die Amplidutden im Vergleich zu den Amplituden in Fig. 6b ohne Ablagerungen verringert, da die Schallwellen 5 beim zweimaligen Durchlaufen der Ablagerungsschicht eine zusätzliche Dämpfung erfahren. Fig. 6e zeigt jeweils die Differenz der von dem weiteren Empfangswandler 16 und dem Empfangswandler 4 aufgenommenen Amplituden. Die aus den Amplituden nach Fig. 6b errechnete Differenz stimmt mit der aus den Amplituden nach Fig. 6d errechneten Differenz überein. Da sowohl ein Signal der V-Durchschallung, das vom Empfangswandler 4 aufgenommen wird, als auch ein Impuls-Echo-Signal, das vom weiteren Empfangswandler 16 aufgenommen wird, die Ablagerungsschicht durchlaufen müssen, wird die Abschwächung der Amplitude, die durch diese Ablagerung bewirkt wird, bei der Bildung der Differenz der beiden Signale herausgerechnet. Die Differenz der beiden Signale ergibt jeweils eine Kennlinie analog zu Fig. 3, anhand derer die Nuttiefe zuverlässig in einer Auswerteeinheit 14 bestimmt werden kann. Hierdurch können trotz Ablagerungen auf dem Prüfkörper 10 Fehlstellentiefen zuverlässig bestimmt werden.

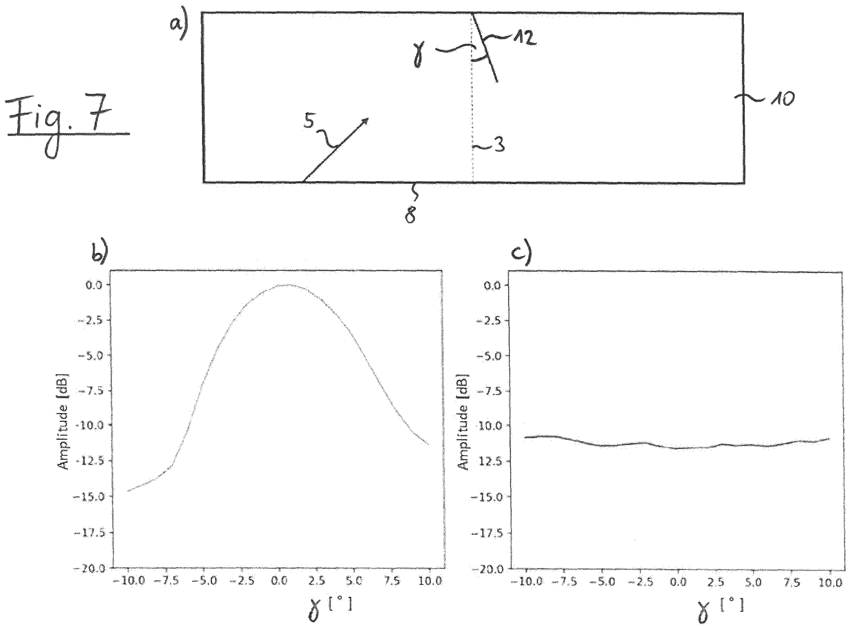

Fig. 7 verdeutlicht einen weiteren Vorteil des erfindungsgemäßen Verfahrens bei schräg liegenden Rissen bzw. Nuten. Fig. 7a zeigt eine schräg im Prüfkörper 10 verlaufende Fehlstelle 12, die einen Winkel γ mit einer Normalen 3 auf die Oberfläche 8 eines Prüfkörpers 10 einschließt. Fig. 7b und 7c zeigen Simulationsergebnisse der Amplituden eines herkömmlichen Winkelspiegelechos (Fig. 7b) und eines erfindungsgemäßen Impuls-Echo-Signals (Fig. 7c) bei Variation der Schräglage der Fehlstelle 12 bis 10 °. Die Amplitude des Winkelspiegelechos hängt stark vom Winkel γ ab, so dass beispielsweise bei einem Neigungswinkel von -10 ° bereits eine Abschwächung um etwa 15 dB vorliegt. Dagegen ist die Amplitude des Impuls-Echo-Signals im Bereich von -10 ° bis + 10 ° nahezu konstant. Daher ist durch die Verwendung des Impuls-Echo-Signals eine zuverlässige Detektion und Bestimmung auch schräg verlaufender Fehlstellen 12 gewährleistet.

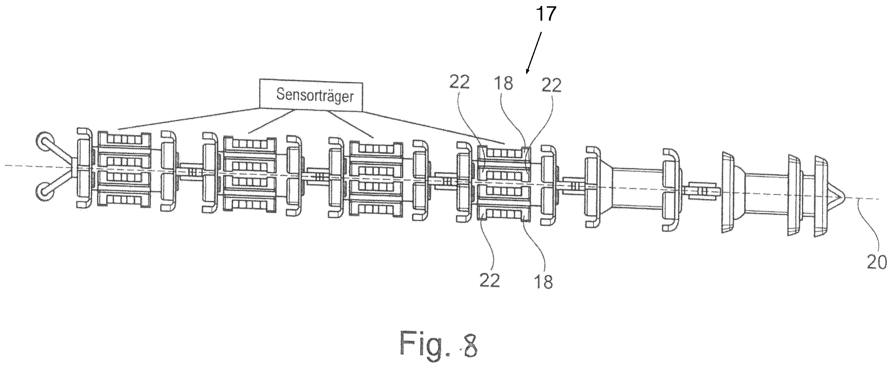

Fig. 8 zeigt eine Vorrichtung 17 zur Detektion von auf Fehlstellen 12 in einen Prüfkörper 10 basierenden Signalen in Form eines Inspektionsmolchs zur Prüfung von Rohrleitungen. Sendewandler 2 und Empfangswandler 4 sind hierbei jeweils in Aufnahmen 18 angeordnet. Die Vorrichtung 17 weist um eine Längsmittelachse 20 herum eine Vielzahl von über den Umfang verteilt angeordneten Aufnahmen 18 mit Sendewandlern 2 und Empfangswandlern 4 auf. Die Aufnahmen 18 sind dabei radial in Richtung eines Prüfkörpers 10 bewegbar. Die Aufnahmen 18 weisen jeweils mindestens ein Führungselement 22 auf, die in Kontakt mit dem Prüfkörper 10 bringbar sind und dergestalt ausgestaltet sind, dass der Sendewandler 2 und der Empfangswandler 4 bei Kontakt des Führungselements 22 mit dem Prüfkörper 10 am Prüfkörper 10 beabstandet in der Aufnahme 18 angeordnet sind. Vorliegend weisen die Aufnahmen 18 jeweils in Vorschubrichtung der Vorrichtung 17 innerhalb einer Rohrleitung vor und nach dem Sendewandler 2 und Empfangswandler 4 angeordnete Führungselemente 22 auf.

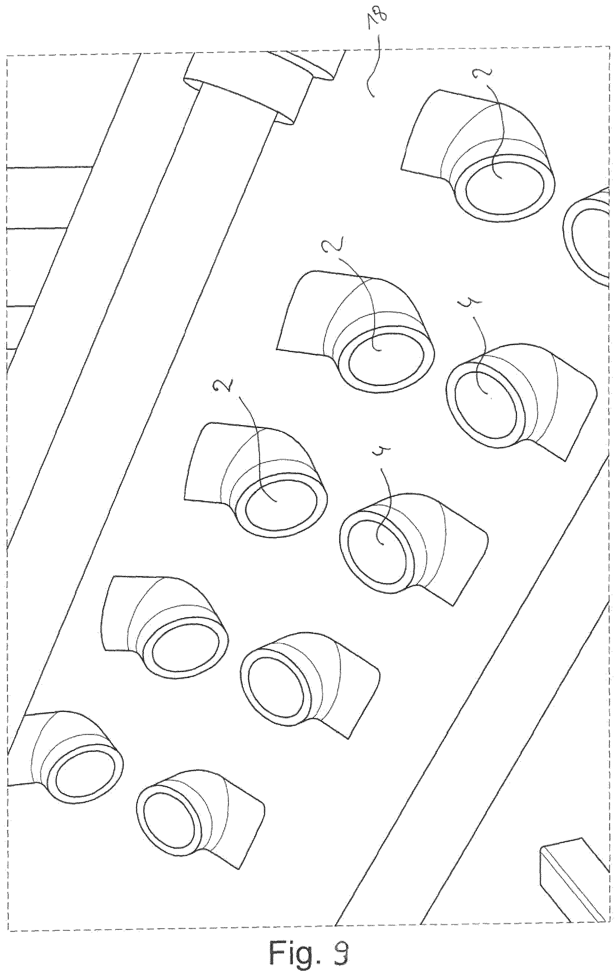

In Fig. 8 sind in einer Aufnahme 18 mehrere Paare von Sendewandler 2 und Empfangswandler 4 angeordnet, die voneinander in Vorschubrichtung beabstandet und leicht zueinander versetzt angeordnet sind, wie dies auch Fig. 9 dargestellt ist. Hierdurch kann mit einem Durchgang der Vorrichtung 17 durch einen zu prüfenden Prüfkörper 10 in Form einer Rohrleitung ein großer Teil des Umfangs der Rohrleitung bei einem Durchgang gleichzeitig erfasst werden. Eine derartige Vorrichtung ermöglicht das Aufnehmen von auf Fehlstellen 12 basierenden Signalen in einem Prüfkörper 10 in einem Durchgang.

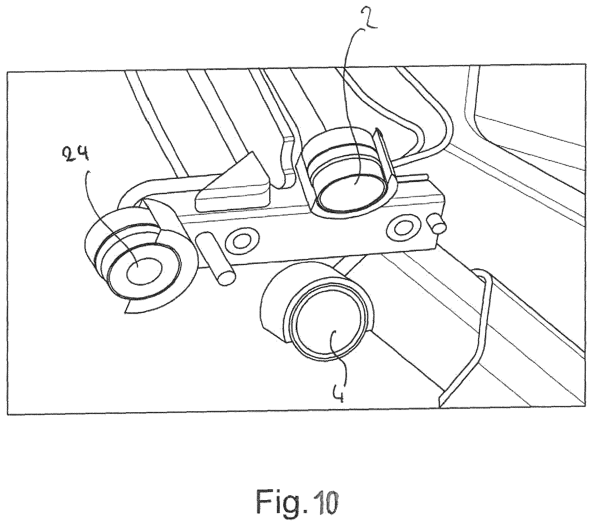

Fig. 10 zeigt eine Anordnung aus Sendewandler 2 und Empfangswandler 4 mit einem Ultraschalltiefensensor 24. Sendewandler 2 und Empfangswandler 4 sind mit ihren akustischen Achsen aufeinander zu angewinkelt angeordnet, so dass eine V-Durchschallung eines Prüfkörpers 10 erfolgen kann. Der Ultraschalltiefensensor 24 ist hingegen mit seiner akustischen Achse senkrecht auf die Oberfläche eines Prüfkörpers 10 ausgerichtet und kann so die Dicke des Prüfkörpers 10 bestimmen. Aus der Dicke des Prüfkörpers 10 bzw. der Abweichung der Prüfkörperdicke von einer nominellen oder angenommenen Prüfkörperdicke kann eine Korrektur der von Sendewandler 2 und Empfangswandler 4 erhaltenen Signale vorgenommen werden.

Diese Korrektur kann beispielsweise durch Hinterlegung unterschiedlicher Korrelationen für Referenzkörper unterschiedlicher Dicke erfolgen. Ein solcher Ultraschalltiefensensor 24 kann auch bei den vorbeschriebenen Ausbildungen eingesetzt werden.

## Patentansprüche

1. Verfahren zur Bestimmung der Ausdehnung von Risstiefen in einem Prüfkörper (10), wobei mindestens ein Sendewandler (2) Schallwellen (5) im Ultraschallbereich anregt, sich die Schallwellen (5) in Form eines Schallbündels ausbreiten, dessen akustische Achse (6) einen Winkel (α) mit der Normalen (3) einer dem Sendewandler (2) zugewandten Oberfläche des Prüfkörpers (10) einschließt, die Schallwellen (5) schräg in den Prüfkörper (10) einkoppeln und an einer Grenzfläche (11) des Prüfkörpers (10) reflektiert werden, und mindestens ein von dem Sendewandler (2) beabstandeter Empfangswandler (4) die an der Grenzfläche (11) des Prüfkörpers (10) reflektierten Schallwellen (5) aufnimmt, wobei aus einer Verringerung der Amplitude der vom Empfangswandler (4) aufgenommenen Schallwellen (5) mittels einer Auswerteeinheit (14) eine Ausdehnung einer innerhalb eines Schallwegs angeordneten Fehlstelle (12) bestimmt wird, wobei der Sendewandler (2) und der Empfangswandler (4) mit einem zumindest im Wesentlichen konstanten Abstand zum Prüfkörper (10) an diesem vorbeigeführt werden und die Schallwellen (5) mit einer Vorlaufstrecke über ein flüssiges Medium in den Prüfkörper (10) eingekoppelt werden und wobei ein weiterer Empfangswandler (16) an einer Fehlstelle (12) reflektierte Schallwellen (5) aufnimmt, **dadurch gekennzeichnet, dass** die Risstiefe aus der Differenz der Amplituden, die der Empfangswandler (4) und der weitere Empfangswandler (16) aufgenommen haben, bestimmt wird.

2. Verfahren nach Anspruch 1, **dadurch gekennzeichnet, dass** der Sendewandler (2) Schallwellen (5) in Form eines Rechteckimpulses oder eines Nadelimpulses anregt.

3. Verfahren nach Anspruch 2, **dadurch gekennzeichnet, dass** der Sendewandler (2) in bestimmten zeitlichen Abständen und/oder an bestimmen räumlichen Positionen, während der Sendewandler (2) und Empfangswandler (4) am Prüfkörper (10) vorbeigeführt werden, Schallwellen (5) anregt.

4. Verfahren nach einem der vorhergehenden Ansprüche, **dadurch gekennzeichnet, dass** der Sendewandler (2) Schallwellen (5) in einem Frequenzbereich zwischen 1 und 10 MHz, insbesondere ca. 4 MHz, anregt.

5. Verfahren nach einem der vorhergehenden Ansprüche, **dadurch gekennzeichnet, dass** der Sendewandler (2) in Form eines Sende- und Empfangswandlers als weiterer Empfangswandler (16) verwendet wird, der die an einer Fehlstelle (12) reflektierten Schallwellen (5) aufnimmt.

6. Verfahren nach einem der vorhergehenden Ansprüche, **dadurch gekennzeichnet, dass** die vom Sendewandler (2) angeregte Schallwelle (5) eine parallele Wellenfront ausbildet.

7. Verfahren nach einem der Ansprüche 1 bis 5, **dadurch gekennzeichnet, dass** die vom Sendewandler (2) angeregte Schallwelle (5) eine divergente Wellenfront ausbildet, die Schallwelle an der Grenzfläche v-förmig reflektiert wird und mehrere in Ausbreitungsrichtung der Schallwellen (5) voneinander und unterschiedlich weit vom Sendewandler beabstandete Empfangswandler (4) jeweils Teile der V-förmig an der äußeren Begrenzungsfläche reflektierten Schallwelle (5) aufnehmen.

8. Verfahren nach Anspruch 7, **dadurch gekennzeichnet, dass** anhand der von den beabstandeten Empfängerwandlern (4) registrierten Amplituden der aufgenommenen Schallwellen (5) sowie bekannten Positionsdaten der einzelnen Empfängerwandler (4) die Ausdehnung einer Fehlstelle (12), insbesondere die Tiefe eines Risses, bestimmt wird.

9. Verfahren nach einem der vorhergehenden Ansprüche, **dadurch gekennzeichnet, dass** über einen Tiefensensor (24) die Dicke des Prüfkörpers (10) bestimmt wird.

10. Anordnung zur Durchführung eines Verfahrens nach einem der Ansprüche 1 bis 9, umfassend eine Vorrichtung (17) zur Detektion von auf Fehlstellen (12) in einem Prüfkörper (10) basierenden Signalen mit zumindest einem Sendewandler (2),zumindest einem Empfangswandler (4) und zumindest einen weiteren Empfangswandler (16), wobei der Sendewandler (2) und der Empfangswandler (4) voneinander beabstandet und mit ihren akustischen Achsen (6) so aufeinander zugeneigt angeordnet sind, dass die Signale einer V-förmigen Durchschallung aufgenommen werden können, wobei der Sendewandler (2),der Empfangswandler (4) sowie der weitere Empfangswandler (16) in einer Aufnahme (18) angeordnet sind, wobei die Aufnahme (18) in Richtung des Prüfkörpers (10) bewegbar ist und die Aufnahme (18) ein Führungselement (22) aufweist, das in Kontakt mit dem Prüfkörper (10) bringbar ist, dergestalt, dass der Sendewandler (2),der Empfangswandler (4) und der weitere Empfangswandler (16) bei Kontakt des Führungselements (22) mit dem Prüfkörper (10) vom Prüfkörper (10) beabstandet in der Aufnahme (18) angeordnet sind, **dadurch gekennzeichnet, dass** die Vorrichtung (17) mehrere Paarungen von Sendewandlern (2),Empfangswandlern (4) und weiteren Empfangswandlern (16) aufweist, die in Vorschubrichtung hintereinander und quer zur Vorschubrichtung zueinander versetzt in einer gemeinsamen Aufnahme (18) angeordnet sind, und dass die Anordnung eine Auswerteeinheit (14) zur Auswertung der von der Vorrichtung aufgenommenen auf Fehlstellen (12) in einen Prüfkörper (10) basierenden Signalen nach dem Verfahren gemäß einem der Ansprüche 1 bis 9 aufweist.

11. Anordnung nach Anspruch 10, **dadurch gekennzeichnet, dass** die Vorrichtung (17) ein die Aufnahme (18) mit einer diese in Richtung des Prüfkörpers (10) bewegenden Kraft beaufschlagendes Rückstellelement aufweist.

12. Anordnung nach Anspruch 10 oder 11, **dadurch gekennzeichnet, dass** einem Sendewandler (2) in unterschiedlichem Abstand zum Sendewandler (2) angeordnete Empfangswandler (4) zugeordnet sind.

13. Anordnung nach einem der Ansprüche 10 bis 12, **dadurch gekennzeichnet, dass** die Vorrichtung (17) als Inspektionsmolch ausgebildet ist, der eine Mittellängsachse (20) aufweist, und der in Umfangsrichtung um die Mittellängsachse (20) verteilt eine Mehrzahl von Aufnahmen (18) aufweist.

## Claims

1. Method for determining the extent of crack depths in a test specimen (10), wherein at least one transmitting transducer (2) excites sound waves (5) in the ultrasonic range, the sound waves (5) propagate in the form of a sound beam, the acoustic axis (6) of which forms an angle (α) with the normal (3) to a surface of the test specimen (10) facing the transmitting transducer (2), the sound waves (5) couple into the test specimen (10) obliquely and are reflected at an interface (11) of the test specimen (10), and at least one receiving transducer (4) spaced apart from the transmitting transducer (2) receives the sound waves (5) reflected at the interface (11) of the test specimen (10), wherein, by means of an evaluation unit (14), an extent of a defect (12) arranged within a sound path is determined from a reduction of the amplitude of the sound waves (5) received by the receiving transducer (4), wherein the transmitting transducer (2) and the receiving transducer (4) are guided past the test specimen (10) at an at least substantially constant distance therefrom and the sound waves (5) are coupled into the test specimen (10) with an advance section via a liquid medium and wherein a further receiving transducer (16) receives sound waves (5) reflected at a defect (12), **characterized in that** the crack depth is determined from the difference between the amplitudes which the receiving transducer (4) and the further receiving transducer (16) have received.

2. Method according to Claim 1, **characterized in that** the transmitting transducer (2) excites sound waves (5) in the form of a rectangular pulse or needle pulse.

3. Method according to Claim 2, **characterized in that** the transmitting transducer (2) excites sound waves (5) at specific time intervals and/or at specific spatial positions while the transmitting transducer (2) and receiving transducer (4) are guided past the test specimen (10).

4. Method according to any of the preceding claims, **characterized in that** the transmitting transducer (2) excites sound waves (5) in a frequency range of between 1 and 10 MHz, in particular approximately 4 MHz.

5. Method according to any of the preceding claims, **characterized in that** the transmitting transducer (2) in the form of a transmitting and receiving transducer is used as further receiving transducer (16) that receives the sound waves (5) reflected at a defect (12).

6. Method according to any of the preceding claims, **characterized in that** the sound wave (5) excited by the transmitting transducer (2) forms a parallel wavefront.

7. Method according to any of Claims 1 to 5, **characterized in that** the sound wave (5) excited by the transmitting transducer (2) forms a divergent wavefront, the sound wave is reflected at the interface in a v-shaped manner and a plurality of receiving transducers (4) spaced apart from one another and from the transmitting transducer to different extents in the direction of propagation of the sound waves (5) in each case receive parts of the sound wave (5) reflected at the outer boundary surface in a V-shaped manner.

8. Method according to Claim 7, **characterized in that** the extent of a defect (12), in particular the depth of a crack, is determined on the basis of the amplitudes of the received sound waves (5), said amplitudes being registered by the spaced apart receiving transducers (4), and also known position data of the individual receiving transducers (4).

9. Method according to any of the preceding claims, **characterized in that** the thickness of the test specimen (10) is determined by means of a depth sensor (24).

10. Arrangement for carrying out a method according to any of Claims 1 to 9, comprising a device (17) for detecting signals based on defects (12) in a test specimen (10), comprising at least one transmitting transducer (2), at least one receiving transducer (4) and at least one further receiving transducer (16), wherein the transmitting transducer (2) and the receiving transducer (4) are arranged at a distance from one another and in a manner inclined towards one another with their acoustic axes (6) such that the signals of a V-shaped through-transmission can be received, wherein the transmitting transducer (2), the receiving transducer (4) and also the further receiving transducer (16) are arranged in a receptacle (18), wherein the receptacle (18) is movable in the direction of the test specimen (10) and the receptacle (18) has a guide element (22), which is able to be brought into contact with the test specimen (10), in such a way that when the guide element (22) makes contact with the test specimen (10), the transmitting transducer (2), the receiving transducer (4) and the further receiving transducer (16) are arranged at a distance from the test specimen (10) in the receptacle (18), **characterized in that** the device (17) has a plurality of pairings of transmitting transducers (2), receiving transducers (4) and further receiving transducers (16) arranged offset with respect to one another transversely with respect to the feed direction and one behind another in the feed direction in a common receptacle (18), and **in that** the arrangement has an evaluation unit (14) for evaluating the signals recorded by the device, said signals being based on defects (12) in a test specimen (10), according to the method according to any of Claims 1 to **9.**

11. Arrangement according to Claim 10, **characterized in that** the device (17) has a restoring element that applies to the receptacle (18) a force that moves the latter in the direction of the test specimen (10).

12. Arrangement according to Claim 10 or 11, **characterized in that** a transmitting transducer (2) is assigned receiving transducers (4) arranged at different distances from the transmitting transducer (2).

13. Arrangement according to any of Claims 10 to 12, **characterized in that** the device (17) is embodied as an inspection pig having a centre longitudinal axis (20) and having a plurality of receptacles (18) distributed around the centre longitudinal axis (20) in the circumferential direction.

## Revendications

1. Procédé de détermination des profondeurs de fissure dans une éprouvette (10), au moins un transducteur d'émission (2) générant des ondes acoustiques (5) dans le domaine ultrasonore, les ondes acoustiques (5) se propageant sous la forme d'un faisceau acoustique dont l'axe acoustique (6) inclut un angle (α) avec la normale (3) à une surface de l'éprouvette (10) tournée vers le transducteur d'émission (2), les ondes acoustiques (5) se couplant de manière oblique dans l'éprouvette (10) et étant réfléchies sur une interface (11) de l'éprouvette (10), et au moins un transducteur de réception (4) écarté du transducteur d'émission (2) acquérant les ondes acoustiques (5) réfléchies sur l'interface (11) de l'éprouvette (10), une extension d'un endroit défectueux (12) situé à l'intérieur d'un chemin acoustique étant déterminée à partir d'une réduction d'amplitude des ondes acoustiques (5) acquises par le transducteur de réception (4) au moyen d'une unité d'évaluation (14), le transducteur d'émission (2) et le transducteur de réception (4) étant guidés devant l'éprouvette (10) à une distance au moins sensiblement constante de celle-ci et les ondes acoustiques (5) étant injectées dans une section amont par le biais d'un milieu liquide dans l'éprouvette (10), et un autre transducteur de réception (16) acquérant les ondes acoustiques (5) réfléchies sur un endroit défectueux (12), **caractérisé en ce que** la profondeur de fissure est déterminée à partir de la différence entre les amplitudes qui ont été acquises le transducteur de réception (4) et l'autre transducteur de réception (16).

2. Procédé selon la revendication 1, **caractérisé en ce que** le transducteur d'émission (2) génère des ondes acoustiques (5) sous la forme d'une impulsion rectangulaire ou d'une impulsion en aiguille.

3. Procédé selon la revendication 2, **caractérisé en ce que** le transducteur d'émission (2) génère des ondes acoustiques (5) à des intervalles de temps déterminés et/ou à des positions spatiales déterminées, pendant que le transducteur d'émission (2) et le transducteur de réception (4) sont guidés devant l'éprouvette (10).

4. Procédé selon l'une quelconque des revendications précédentes, **caractérisé en ce que** le transducteur d'émission (2) génère des ondes acoustiques (5) dans une gamme de fréquences comprise entre 1 et 10 MHz, en particulier environ 4 MHz.

5. Procédé selon l'une quelconque des revendications précédentes, **caractérisé en ce que** le transducteur d'émission (2) est utilisé sous la forme d'un transducteur d'émission et de réception en tant qu'autre transducteur de réception (16), qui acquiert les ondes acoustiques (5) réfléchies sur un endroit défectueux (12).

6. Procédé selon l'une quelconque des revendications précédentes, **caractérisé en ce que** l'onde acoustique (5) générée par le transducteur d'émission (2) forme un front d'onde parallèle.

7. Procédé selon l'une quelconque des revendications 1 à 5, **caractérisé en ce que** l'onde acoustique (5) générée par le transducteur d'émission (2) forme un front d'onde divergent, l'onde acoustique est réfléchie en forme de V sur l'interface et plusieurs transducteurs de réception (4) espacés les uns des autres et différemment éloignés du transducteur d'émission dans la direction de propagation des ondes acoustiques (5) acquièrent respectivement des parties de l'onde acoustique (5) réfléchie en forme de V sur la surface de délimitation extérieure.

8. Procédé selon la revendication 7, **caractérisé en ce que**, sur la base des amplitudes des ondes acoustiques (5) acquises ayant été enregistrées par les transducteurs de réception (4) espacés, ainsi que de données de position connues des transducteurs de réception (4) individuels, l'extension d'un endroit défectueux (12), en particulier la profondeur d'une fissure, est déterminée.

9. Procédé selon l'une quelconque des revendications précédentes, **caractérisé en ce que** l'épaisseur de l'éprouvette (10) est déterminée par l'intermédiaire d'un capteur de profondeur (24).

10. Agencement pour la mise en œuvre d'un procédé selon l'une quelconque des revendications 1 à 9, comprenant un dispositif (17) de détection de signaux basés sur des endroits défectueux (12) dans une éprouvette (10) avec au moins un transducteur d'émission (2), au moins un transducteur de réception (4) et au moins un autre transducteur de réception (16), le transducteur d'émission (2) et le transducteur de réception (4) étant espacés l'un de l'autre et agencés de manière inclinée l'un vers l'autre avec leurs axes acoustiques (6) de sorte que les signaux d'un balayage acoustique en forme de V puissent être enregistrés, le transducteur d'émission (2), le transducteur de réception (4) ainsi que l'autre transducteur de réception (16) étant agencés dans un logement (18), le logement (18) étant mobile en direction de l'éprouvette (10) et le logement (18) présentant un élément de guidage (22) qui peut être mis en contact avec l'éprouvette (10), de telle sorte que le transducteur d'émission (2), le transducteur de réception (4) et l'autre transducteur de réception (16) soient agencés à distance de l'éprouvette (10) dans le logement (18) lors du contact de l'élément de guidage (22) avec l'éprouvette (10), **caractérisé en ce que** le dispositif (17) présente plusieurs paires de transducteurs d'émission (2), de transducteurs de réception (4) et d'autres transducteurs de réception (16), qui sont agencés les uns derrière les autres dans la direction d'avancement et décalés les uns par rapport aux autres transversalement à la direction d'avancement dans un logement (18) commun, et **en ce que** l'agencement comprend une unité d'évaluation (14) destinée à évaluer les signaux acquis par le dispositif sur la base d'endroits défectueux (12) dans une éprouvette (10) conformément au procédé selon l'une quelconque des revendications 1 à **9.**

11. Agencement selon la revendication 10, **caractérisé en ce que** le dispositif (17) présente un élément de rappel qui applique une force au logement (18) le déplaçant en direction de l'éprouvette (10).

12. Agencement selon la revendication 10 ou 11, **caractérisé en ce qu'**un transducteur d'émission (2) est associé à des transducteurs de réception (4) agencés à différentes distances du transducteur d'émission (2).

13. Agencement selon l'une quelconque des revendications 10 à 12, **caractérisé en ce que** le dispositif (17) est conçu sous forme de racleur d'inspection qui présente un axe longitudinal central (20), et qui présente une pluralité de logements (18) répartis dans la direction circonférentielle autour de l'axe longitudinal central (20).
